# EUROPEAN PATENT SPECIFICATION

(11) **EP 1 487 638 B1**
(45) Date of publication and mention of the grant of the patent: **15.02.2017**
(21) Application number: 03714212.2
(22) Date of filing: 17.03.2003
(51) Int. Cl.: B65D 85/72

(54) **NON-FOIL BARRIER LAMINATES**
SPERRLAMINATE OHNE FOLIE
LAMINES BARRIERE DE TYPE NON METALLIQUE

(30) Priority: 25.03.2002 US 105713; 06.11.2002 US 288841
(43) Date of publication of application: 22.12.2004
(73) Proprietor: Evergreen Packaging International B.V., 1043 EJ Amsterdam (NL)
(72) Inventor: REIGHARD, Tricia, Susan, Loveland, OH 45140 (US); BUSHMAN, Alexander, Craig, Loveland, OH 45140 (US); MARCHMAN, James, Irvin, Cincinnati, OH 45245 (US)
(74) Representative: Kunz, Herbert
(86) International application number: PCT/US2003/008165
(87) International publication number: WO 2003/082568

(56) References cited:
- WO-A-98/03332
- US-A- 4 888 222
- US-A- 4 888 222
- US-A- 5 116 649
- US-A- 5 555 702

## Description

### Background of the Invention

This invention relates to non-foil barrier laminate structures for food packaging and to a container for food products, particularly liquids.

The barrier structures of the present invention may be used in a variety of packages, including paper cartons, cups, canisters, pouches, plastic bottles, bags and the like. The barrier structures are heat sealable, thus providing for facile conversion of the barrier structure into cartons and similar packages, which require heat sealing. The barrier structures of the present invention are particularly useful in packaging beverages, fruit juices and citrus juices and in particular orange juice. The non-foil barrier laminates have excellent oxygen barrier characteristics as well as the ability to protect the products therein against vitamin C degradation, flavor loss, browning and microbial growth.

Paperboard coated with low density polyethylene (LDPE) has been used to make beverage containers, but these fall short in providing an acceptable container for some products such as fruit juices. In particular, paperboard coated with LDPE has a relatively high permeability to oxygen, which may lead to loss of flavor components and vitamins through oxidation during storage. Flavor loss can also occur as a result of migration or uptake of flavor components into the LDPE layer, a process referred to as "scalping." Additional barrier materials to oxygen and flavor components have therefore been investigated to achieve the desired goal.

The oxidative loss of vitamin C can be substantially reduced by the use of a laminate containing a metal foil as an oxygen barrier along the interior of the container. However, the economics involved in using a metal foil often require a price premium that limits profitability. Further, metal foil laminates are prone to develop pin holes seriously affecting their ability to contain liquids. A search for economically acceptable alternatives to foil has resulted in the development of laminate structures utilizing coextruded polymer materials such as polypropylene, polyethylene terephthalate (PET), polyvinylchlorides, polyvinylidene chloride (PVdC), ethylene vinyl alcohol copolymer (EVOH) and other polymeric materials as the barrier material to provide protection against the transfer of oxygen.

Polyamides (nylons) have also been proposed and used commercially as barrier layers in plastic packaging materials. The nylon barrier layer not only provides an effective barrier to oxygen but also provides thermal resistance, mechanical strength and durability.

WO98/03332A discloses a laminate with the layer sequence paper/ polyamide/EVOH employed in a heat sealable food packaging material.

In addition, structures comprising various Nylon 6, Nylon 66, Nylon 11, Nylon 12 polymers and the like, having tensile strength of 68.9 MPa (10000 psi) or more have been used as abuse-resistant layers in combination with a caulking adhesive tie polymer such as a Surlyn ionomer or an ethylene methacrylic acid polymer resin and an oxygen barrier such as aluminum foil for paperboard beverage containers.

In addition to being less expensive than foil-containing structures, paperboard laminates containing barrier materials as afore disclosed have been found to exhibit lower flavor loss by using less LDPE as the product contact layer. Commercial structures for a paperboard carton for juice and similar products now frequently utilize a laminate containing either nylon or ethylene vinyl alcohol copolymer as a barrier to oxygen and flavor oils.

It is an object of the present invention to provide an improved, heat sealable barrier laminate material for use in a variety of food packaging.

Still another object of the invention is to provide an improved heat sealable barrier laminate material for a beverage and/or juice carton for citrus, berry, and other juices which does not scalp flavor/aroma ingredients of the beverage, exhibits a substantial barrier to the loss of vitamin C, and has performance equal to or better than that of conventionally used polymer barrier laminates.

It is a further object of the invention to provide a heat sealable laminate material having a low oxygen permeability during filling over a range of temperatures (hot fill to cold fill) and at both room temperature and refrigerated storage conditions.

Still a further object of the invention is to provide improved heat sealable, non-foil laminates for beverages, fruit or citrus juices, and the like, as well as non-liquid dry products, which are easy to manufacture, which provide reliable performance in the field, including a high degree of flavor, color and vitamin protection across the product's shelf life.

It is another object of the present invention to provide a beverage carton constructed of a laminate effective to prevent the intrusion of oxygen into the carton protecting the contents from oxygen degradation of essential nutrients and vitamin components particularly Vitamin C.

Yet another object is to provide a beverage carton constructed of a laminate effective for hot fill and cold fill applications followed by either room temperature or refrigerated storage.

In accordance with the invention, the barrier laminates include a substrate or base layer having an interior and exterior surface, a first layer of polyolefin coated on the exterior surface of the substrate, a polyamide layer primarily for mechanical strength and thermal resistance applied onto the interior surface of the substrate, a second and innermost layer of polyolefin that will contact the contents of the container, a first oxygen barrier layer of EVOH applied directly onto said polyamide layer, and a second barrier layer of EVOH, nylon or the like provided intermediate the first oxygen barrier layer of EVOH and the innermost polyolefin layer but which is not in contact with the first EVOH layer.

In accordance with an embodiment of the invention, the barrier laminates may include a tie layer interior to and applied directly onto the polyamide layer, the tie layer thereby being positioned intermediate the polyamide layer and the first EVOH layer.

In a preferred embodiment of the invention, a tie layer is applied directly onto the first EVOH layer, a layer of polyolefin is provided over the tie layer, a second tie layer is applied directly onto the polyolefin layer and the second EVOH layer is applied directly onto the second tie layer. In addition, a tie layer may be positioned immediately adjacent to and between the second EVOH layer and the polyolefin product contact layer.

Traditionally, beverages, particularly fruit juices packed in cartons, particularly gable top cartons, have been kept refrigerated throughout the distribution process in order to avoid rapid spoilage due to microbial growth. Microbial growth can result from incomplete sterility of the product, carton, or filling system. It is only with continual refrigeration to retard microbial growth that a typical shelf life of several weeks can be assured. As a result, products packed in this way are not said to be shelf stable.

Shelf stability of packaged beverages, particularly fruit juices, is extremely desirable from many standpoints. A shelf stable product is much less likely to spoil while in the distribution system and with a shelf life measured in months rather than days, losses due to spoilage should be low. The packer does not need to maintain the product under refrigeration either in its warehouse or while in transport. Similarly the retailer need not allocate expensive refrigerated space to store its supply of product. The consumer also has the advantage of a product which does not require refrigeration until opened.

Processes and apparatus for packaging perishable liquid food products and in particular juices are described in U.S. Pat. Nos. 5,555,702 and 5,421,512.

Hot fill processes such as are disclosed in the aforenoted patents, are useful for acidic products (pH of 4.5 or less) such as fruit juices, punches, and drinks. The product is heated to a temperature not exceeding approximately 87.78 °C (190°F) to inhibit microbiological activity before filling hot into the package. The package is then cooled to less than 37.78 °C (100 °F) within 20-30 minutes to preserve maximum flavor and color integrity. As the product cools, a partial vacuum is created on the package. The resulting package can be stored at room temperature for extended periods of time (often 3 months or longer) without compromise of product quality.

Loss of product quality (i.e., microbial growth, browning, degradation of vitamins, or flavor loss) is dictated primarily by rate of oxygen ingress into the package. Hot fill gable top cartons have historically been constructed using aluminum foil because it is an excellent oxygen barrier. However, foil is susceptible to cracking (particularly in the score areas), is expensive, and is difficult to recycle in many regions of the world. The development of a non-foil alternative would potentially overcome these shortcomings.

Beverages and particularly fresh juices are generally filled into packages at cold temperatures, sealed, and stored cold throughout the distribution chain. However, at times and in some parts of the world, interruptions in the refrigerated distribution chain occur and loss of product quality (i.e. microbial growth, browning, degradation of vitamins, or flavor loss) is experienced.

Beverages and particularly fresh juices are filled into packages at cold temperatures and stored at optimum refrigerated conditions throughout the package shelf life often still show a loss in product quality as the product ages. This is demonstrated by vitamin C degradation, flavor loss, browning and in some cases, microbial growth. The development of a superior non-foil package structure for beverages, citrus and berry juices that are cold filled and stored cold or that are cold filled and experience interrupted refrigeration during storage is also within the scope of the invention.

### Summary of the Invention

In accordance with the invention, there are provided non-foil laminates for liquid and non-liquid (dry) products, preferably for fruit, berry or citrus juices, beverages and the like, which are easy to manufacture and provide reliable performance in the field which comprise a multi-layer polymer structure including a paperboard substrate having an exterior and an interior surface, a first layer of polyolefin applied onto the exterior surface of the paperboard substrate, a polyamide layer applied onto the interior surface of the substrate, a second and innermost layer of polyolefin that will contact the contents of the container, a first oxygen barrier layer of EVOH applied directly onto said polyamide layer or separated therefrom by providing a tie layer onto the polyamide layer intermediate the polyamide and first EVOH layers, and a second barrier layer in accordance with item f) of claim 10 provided intermediate the first oxygen barrier layer of EVOH and the innermost polyolefin layer but which is not in contact with the first EVOH layer.

In accordance with a preferred embodiment a polyamide layer is applied directly to the interior surface of the paperboard substrate, a first layer of ethylene vinyl alcohol copolymer ("EVOH") is positioned immediately adjacent to the polyamide layer and a second EVOH layer is located in the interior of the laminate separated from the first EVOH layer by at least one polymer layer.

In another preferred embodiment, the second EVOH layer is separated from the polyolefin food contact layer by a tie layer positioned between the polyolefin food contact layer and the second EVOH layer, a layer of polyolefin is then preferably provided intermediate said first and second EVOH layers and most preferably a first tie layer is applied directly onto the first EVOH layer, a layer of polyolefin is provided over the first tie layer and a second tie layer is provided directly onto the polyolefin layer with the second EVOH layer being applied directly onto the second tie layer. A third tie layer is then applied onto the second EVOH layer intermediate it and the innermost layer of polyolefin. In this embodiment, a tie layer may also be included intermediate the polyamide and first EVOH layers.

### Brief Description of the Drawings

FIG. 1 is a cross-sectional elevation of a preferred embodiment of the laminate of the present invention.
FIG. 2 is a graphic representation of % vitamin C retained vs. days after filling for cartons that were hot filled with orange juice and stored at 73°F [22.78°C] for 85 days.
FIG. 3 is a graphic representation of % vitamin C retained vs. days after filling for cartons that were cold filled with orange juice and stored at 73°F [22.78°C] for 64 days.
FIG. 4 is a graphic representation of % vitamin C retained vs. days after filling for cartons that were cold filled with orange juice and stored at 38°F [3.33°C] for 64 days.
FIG. 5 is a graphic representation of % vitamin C retained vs. days after filling for cartons that were hot filled with orange juice and stored at 73°F [22.78°C] for 69 days.
FIG. 6 is a graphic representation of % vitamin C retained vs. days after filling for cartons that were cold filled with orange juice and stored at 73°F [22.78°C] for 56 days.
FIG. 7 is a graphic representation of % vitamin C retained vs. days after filling for cartons that were cold filled with orange juice and stored at 38°F [3.33°C] for 63 days.

### Detailed Description of the Preferred Embodiments of the Invention

A non-foil coextruded laminate structures was prepared suitable for use in hot fill or cold fill applications. All weights are expressed in pounds per 3000 square feet [kg per 278.71 square meter].

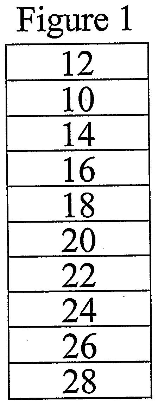

Referring to FIG. 1, the structure 5 contains a paperboard substrate 10 (100-300 lbs. [45.36-136.08 kg]) onto which there is applied on one side an extrusion coating of polyolefin polymer layer 12 such as low density polyethylene at a coating weight of 5-20 lbs. [2.27-9.07 kg] and preferably about 12 lbs. [5.44 kg] to provide the outer surface of the laminate.

Layer 12 is the outer "gloss" layer. Preferably, the polyolefin polymer is polyethylene and most preferably, a low density polyethylene. Typical of the preferred low density polyethylenes which can be employed in layer 12 are Tenite 1924P polyethylene available from Eastman Chemical Co., Kingsport, Tenn. and Chevron 4517 available from Chevron Phillips Chemical Co., Houston, Tex.

On the interior of the substrate 10, there is applied a polyamide layer 14 (1-20 lbs. [0.45-9.07 kg] and preferably about 5 lbs. [2.27 kg]). The polyamide polymer layer can be, but is not limited to, nylon 6, nylon 66, nylon 10, nylon 6-10, nylon 12, amorphous nylons, MXD-6, nylon nanocomposites, and other suitable polyamides. One appropriate nylon 6 material is Honeywell B73QP. Onto the inner surface of layer 14 there is applied an oxygen barrier layer of ethylene vinyl alcohol copolymer 16 having a coating weight of between 0.5-10 lbs. [0.23-4.54 kg] and preferably approximately 3-6 lbs. [1.36-2.72 kg]. The ethylene vinyl alcohol copolymer layer may contain 26-44 mole % ethylene. Layer 16 can also be, but is not limited to, oxygen scavenging EVOH materials such as those under development by Nippon Gohsei or Kuraray, EVOH nanocomposites, or blends of EVOH with polyolefins such as low density polyethylene. A preferred ethylene vinyl alcohol copolymer is sold under the product name Soarnol D2908 resin and is available from Soarus LLP.

There is then applied to the underside of the ethylene vinyl alcohol copolymer layer 16, a tie layer 18 (0.5-15 lbs. [0.23-6.80 kg] and preferably about 8 lbs. [3.63 kg] preferably based on, but not limited to, ethylene-based copolymers modified with maleic anhydride functional groups such as Plexar 5125 produced by MSI Technologies.

A polyolefin layer 20 is applied to the underside of the tie layer 18 and has a coating weight of 1-20 lbs. [0.45-9.07 kg] and preferably about 4-10 lbs. [1.81-4.54 kg]. A second tie layer 22 (1-5 lbs. [0.45-2.27 kg], preferably approximately 1.5 lbs. [0.68 kg]) is applied onto layer 20. Another barrier layer preferably EVOH, (1-10 lbs. [0.45-4.54 kg], and preferably about 3 lbs. [1.36 kg]) 24 is applied to the interior of layer 22. Layer 24 can be, but is not limited to, ethylene vinyl alcohol copolymers (containing 26-44 mole % ethylene), oxygen scavenging EVOH materials, EVOH nanocomposites, EVOH combined with other inorganic fillers (such as talc or kaolin), or blends of EVOH with other polymers (such that EVOH remains the continuous phase); polyvinyl alcohols (PVOH); polyamides such as, but not limited to, nylon 6, nylon 6/66, nylon 6/9, nylon 6/10, nylon 6-10, nylon 11, nylon 12, amorphous nylons, MXD-6, nylon nanocomposites, nylon combined with other inorganic fillers (such as talc or kaolin), and blends of nylon with other polymers (such that the nylon remains the continuous phase); polyethylene terephthalates including glycol-modified polyethylene terephthalates, acid-modified polyethylene terephthalates, PET nanocomposites, PET combined with other inorganic fillers (such as talc or kaolin), and blends of PET with other polymers (such that the PET remains the continuous phase); PEN; vinylidene chloride copolymer; polyvinyl chloride polymers; polyolefins including, but not limited to, low density polyethylene, high density polyethylene, linear low density polyethylene, polypropylene, cyclic olefin copolymers, and blends thereof; polycarbonates; and liquid crystal polymers. In addition, desiccants, molecular sieves, and the like may be added to layer 24 to improve water vapor barrier characteristics of the layer; and molecular sieves, cyclodextrins, and the like may be added to same layer for improved flavor/aroma barrier. To layer 24 is applied a third tie layer 26 (1-5 lbs. [0.45-2.27 kg], preferably about 1.5 lbs. [0.68 kg]) followed by a polyolefin polymer layer 28 forming the product contact surface. Layer 28 has a coating weight of 1-20 lbs. [0.45-9.07 kg] and preferably approximately 4-10 lbs. [1.81-4.54 kg].

The polyolefin layers 12, 20, and 28 can be, but are not limited to, low density polyethylene, linear low density polyethylene, high density polyethylene, polypropylene, cyclic olefin copolymers, and blends thereof.

The polyamide polymer layer 14 is provided mostly for mechanical strength and thermal resistance to improve the overall distribution abuse resistance and bulge resistance of the laminate 5. The EVOH layer 16 serves as a barrier to oxygen ingress much as the aluminum foil layer does in traditional hot fill structures. The polyolefin layer 20 along with the tie layer 18 serves the same function as a caulking layer that melts to some extent in subsequent heating steps, filling channels that form when the laminate is folded and heat sealed to form a container. The layer 24 may act as a barrier to oxygen, water vapor, or aromas/flavors depending on the materials selection. In the preferred embodiment, layers 26 and 28 are relatively thin as a means of minimizing the loss of flavor oils. The presence of an aroma/flavor barrier layer 24 further minimizes flavor oil loss. In addition, by providing layers 26 and 28, the side seams of packages produced with the laminate 5 can be skived since the polyolefin polymer can be heat sealed to itself and to the gloss layer 12.

Referring to laminate 5 in FIG. 1, the polyolefin polymer layer 12 is extrusion coated onto the substrate 10. The polyamide 14, ethylene vinyl alcohol copolymer 16, and tie layer 18 are then deposited as a coextrusion on the uncoated side of substrate 10. The polyolefin layer 20, tie layer 22, barrier layer 24, tie layer 26, and polyolefin layer 28 are then produced as a coextrusion and coated onto the first coextrusion, yielding laminate 5. While this is one method of forming the laminate 5, other methods can be employed to result in the same final structure.

The following examples are provided for further illustrating the invention, but are not to be construed as limitation thereof.

### Example 1

A non-foil hot fill structure (described as "NFHF") consistent with the format of laminate 5 in FIG. 1 was produced using 5 lbs. [2.27 kg] amorphous nylon in layer 14, 6 lbs. [2.27 kg] ethylene vinyl alcohol copolymer in layer 16, and 5 lbs. [2.27 kg] amorphous nylon in layer 24. No difficulties were encountered during extrusion coating or converting into skived liter gable top cartons. The cartons were then hot filled with orange juice from concentrate that was processed at 190°F [87.78°C]. A commercially available hot fill foil carton ("Foil"), a commercially available non-foil barrier carton for cold filled products ("NFCF"), and a nylon barrier carton typically used for cold filled products ("nylon") were also hot filled under the same conditions. Each of the structures contains a paperboard substrate coated with an external layer of LDPE (approximately 12 lbs. [5.44 kg]). The foil carton contains a thick LDPE layer (about 33 lbs. [14.97 kg]) over the foil barrier layer on the product contact side of the carton. The NFCF carton structure was produced with an interior construction of 5 lbs. [2.27 kg] nylon 6 applied to the paperboard followed by 1.5 lbs. [0.68 kg] adhesive tie, 18 lbs. [8.16 kg] LDPE, 2 lbs. [9.91 kg] EVOH, 1.5 lbs. [0.68 kg] tie, and 4 lbs. [1.81 kg] LDPE as the product contact layer. The "nylon" laminate was produced using 12 lbs. [5.44 kg] amorphous nylon applied to the paperboard followed by 1.5 lbs. [0.68 kg] adhesive tie, and 22 lbs. [9.98 kg] LDPE as the product contact layer. The filled cartons were stored at ambient conditions (73°F [22.78°C]) throughout the shelf life evaluation.

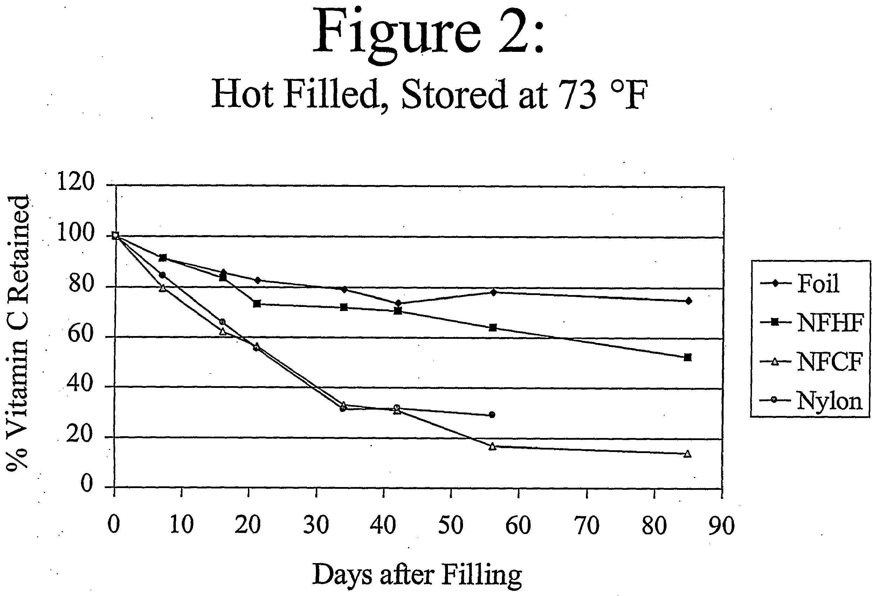

Vitamin C content was measured during filling and subsequently at days 7, 16, 21, 34, 42, 56 and 85 after filling. A plot of % vitamin C retained vs. days after filling is shown in FIG. 2. The experimental non-foil hot fill (NFHF) carton (invention) is nearly equivalent to foil in terms of vitamin C retention through six weeks shelf life but ended 22% lower than foil after 85 days. Vitamin C retention of the existing NFCF structure was 38% poorer than the NFHF carton and 60% poorer than the foil control. The nylon laminate also performed poorly, nearly matching the NFCF structure.

### Example 2

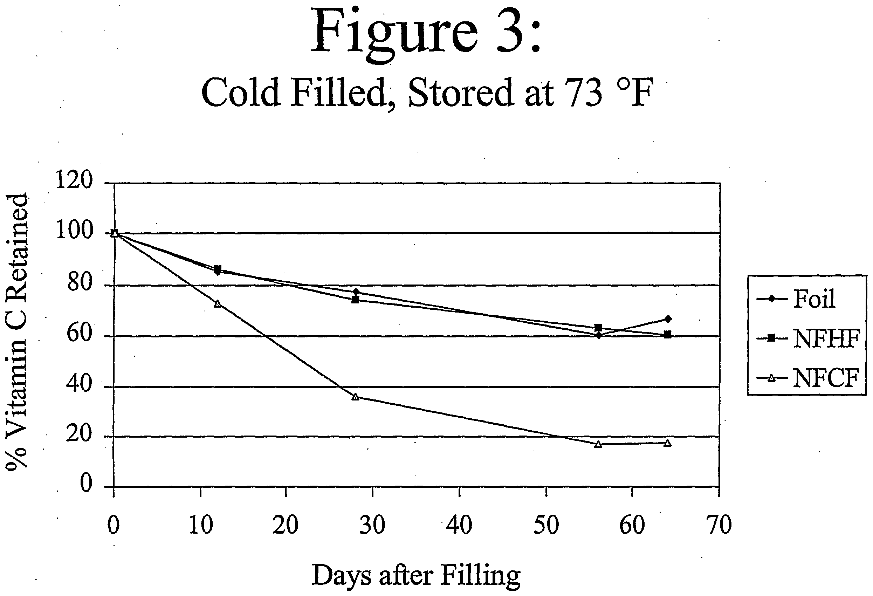

The NFHF, NFCF, and foil cartons used in Example 1 were also cold filled with fresh orange juice and stored at room temperature (73°F [22.78°C]) for 64 days. Vitamin C content was measured during filling and at days 12, 28, 56 and 64 after filling. A plot of % vitamin C retained vs. days after filling is shown in FIG. 3. In this example, the experimental non-foil hot fill (NFHF) structure performed equivalently to the foil control across the 64 day shelf life test. Performance of the existing non-foil structure for cold filled (NFCF) applications was again significantly poorer with a 46% greater loss in vitamin C compared to foil and NFHF.

### Example 3

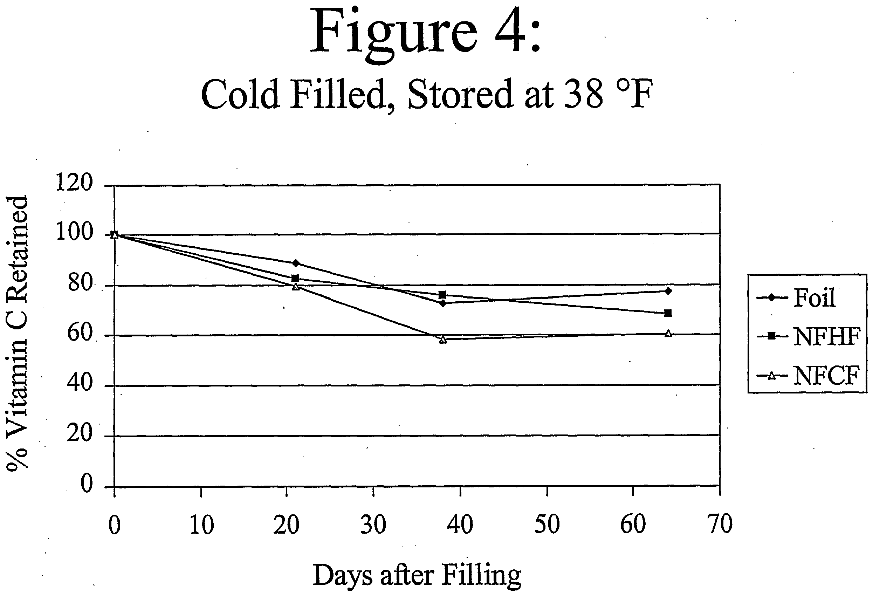

Cartons identical to the three carton structures of Example 2 were also cold filled with fresh orange juice and stored at refrigerated conditions (38°F [3.33°C]) for 64 days. Vitamin C content was measured during filling and at days 21, 38 and 64 after filling. A plot of % vitamin C retained vs. days after filling is shown in FIG. 4. In this example, the experimental non-foil hot fill (NFHF) structure performed at a level that was 9% poorer than the foil carton but 8% better than the NFCF carton.

### Example 4

A structure (NFHF A) consistent with the format of laminate 5 of FIG. 1 was produced using 5 lbs. [2.27 kg] nylon 6 in layer 14, 3 lbs. [1.36 kg] ethylene vinyl alcohol copolymer in layer 16, and 3 lbs. [1.36 kg] ethylene vinyl alcohol copolymer in layer 24. A second structure (NFHF B) was produced using 5 lbs. [2.27 kg] nylon 6 in layer 14, 3 lbs. [1.36 kg] ethylene vinyl alcohol copolymer in layer 16, 3 lbs. [1.36 kg] LDPE in layer 24, and 1.5 lbs. [0.68 kg] LDPE each in layers 22 and 26. The total LDPE content in layers 20 through 28 was 18 lbs. [8.16 kg] The NFHF B carton structure is comparable to the laminate defined in Salste et al. U.S. Pat. No. 6,383,582. These structures along with the foil and NFCF structures used in the previous examples were hot filled with orange juice that had been processed at 190°F [87.78°C] and stored at room temperature (73°F [22.78°C]) for 69 days.

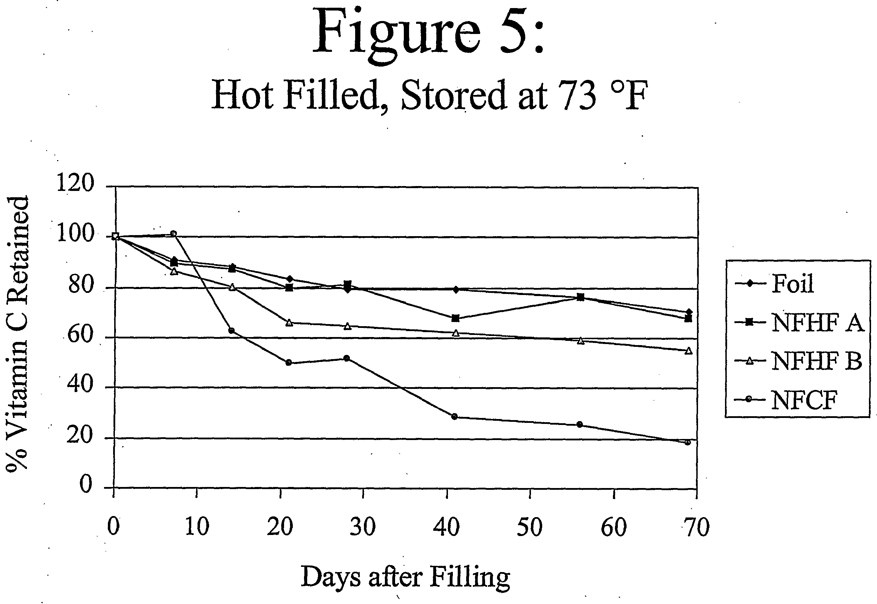

Vitamin C content was measured during filling and at days 7, 14, 21, 28, 41, 56, and 69 after filling. A plot of % vitamin C retained vs. days after filling is shown in FIG. 5. Vitamin C retention of the NFHF A structure was equivalent to the foil control after 69 days, while the overall vitamin C retention in NFHF B was 15% poorer than foil. The NFCF carton structure again performed the worst with a 52% greater vitamin C loss compared to foil at the end of the study.

### Example 5

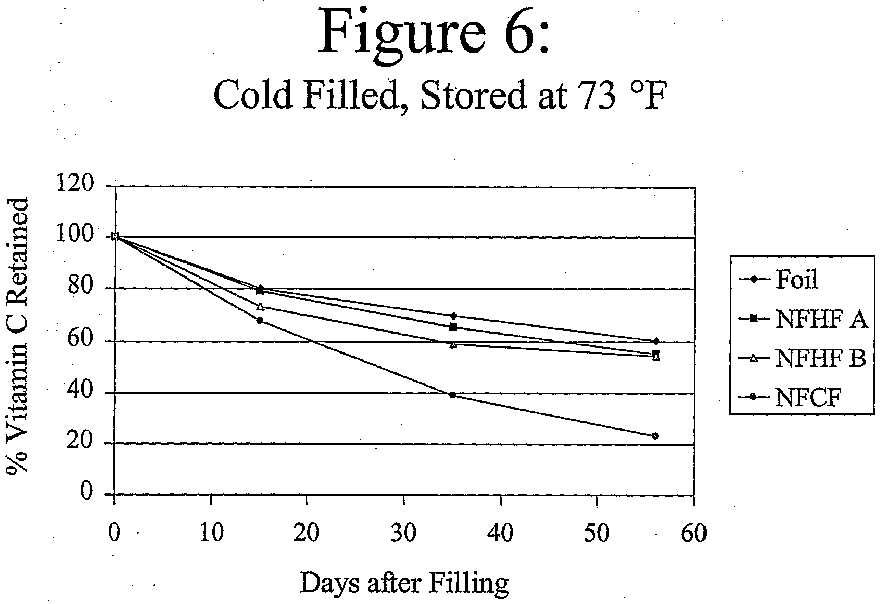

The four carton structures used in Example 4 were also cold filled with fresh orange juice and stored at room temperature (73°F [22.78°C) for 56 days. Vitamin C content was measured during filling and at days 15, 35, and 56 after filling. A plot of % vitamin C retained vs. days after filling is shown in FIG. 6 establishing that the NFHF A and B structures performed comparably to the foil control and significantly better than the NFCF carton structure.

### Example 6

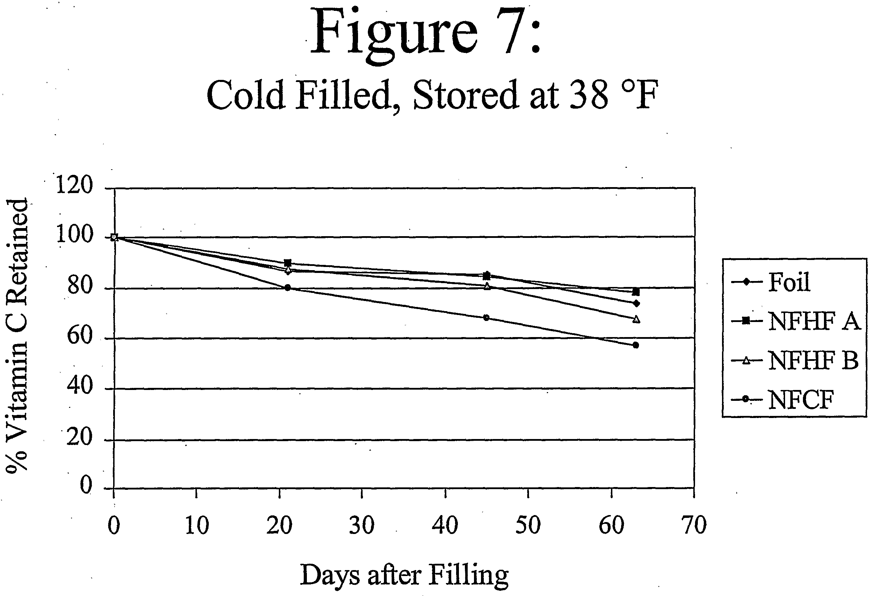

The four carton structures of Example 4 were also cold filled with fresh orange juice and stored at refrigerated conditions (38°F [3.33°C]) for 63 days. Vitamin C content was measured during filling and at days 21, 45, and 63 after filling. A plot of % vitamin C retained vs. days after filling is shown in FIG. 7. Once again, vitamin C retention in the NFHF A structure was nearly equivalent to foil and slightly poorer than foil with the NFHF B structure. Vitamin C retention in the NFCF structure was about 17% poorer than foil after 63 days.

The results of the Examples show that the packaging material of the present invention labeled NFHF in FIGS. 2, 3, and 4 and NFHF A in FIGS. 5, 6, and 7 performs comparably to foil and better than the reference materials labeled NFCF and NFHF B (Salste et al. U.S. Pat. No. 6,383,582). The superiority of the packaging material of the invention was demonstrated at all three fill/storage conditions but was particularly evident in the comparisons performed in hot filled cartons stored at 73°F [22.78°C].

While the invention has been illustrated and described with reference to specific fill/storage conditions, it is not intended to be limited to these. It can be appreciated that storage can take place over a fairly broad range of temperatures, both in the case of so-called room temperature storage and so-called refrigerated storage.

## Claims

1. A non-foil oxygen barrier laminate for producing a container comprising from the outer surface to the inner surface contacting the container's contents:
a) a paperboard substrate having an exterior and an interior surface;
b) a first layer of polyolefin coated on said exterior surface of said paperboard substrate;
c) a layer of polyamide applied onto said interior surface of said paperboard substrate;
d) a second and innermost layer of polyolefin that will contact the contents of the container;
e) a first oxygen barrier layer of EVOH applied directly onto said polyamide layer;
f) a second layer of EVOH which is provided intermediate said first EVOH layer and said innermost polyolefin layer but which is not in contact with said first EVOH layer;
g) a polymer layer intermediate the first and second EVOH layers.

2. The oxygen barrier laminate according to claim 1 wherein the polymer layer is a third layer of polyolefin intermediate said first and second EVOH layers.

3. An oxygen barrier laminate according to claim 2 wherein a tie layer is applied directly onto said first EVOH layer.

4. An oxygen barrier laminate according to claim 2 wherein a tie layer is applied directly onto said first EVOH layer, said third layer of polyolefin is provided directly over said tie layer and a second tie layer is applied directly onto said third polyolefin layer.

5. An oxygen barrier laminate according to claim 4 wherein said second EVOH layer is applied directly onto said second tie layer.

6. An oxygen barrier laminate according to claim 5 wherein a third tie layer is applied onto said second EVOH layer and contacts said innermost polyolefin layer.

7. An oxygen barrier laminate according to claim 2 wherein a tie layer is applied directly onto said first EVOH layer, said third layer of polyolefin is provided over said tie layer, a second tie layer is applied directly onto said polyolefin layer and said second EVOH barrier layer is applied directly onto said second tie layer.

8. An oxygen barrier laminate according to claim 7 wherein a third tie layer is applied directly onto said second EVOH barrier layer and contacts said innermost layer of polyolefin.

9. The oxygen barrier laminate according to claim 1, wherein the intermediate tie layer is a first tie layer applied onto said first EVOH layer; and further comprising:
a third layer of polyolefin applied directly onto said first tie layer;
a second tie layer applied directly onto said third polyolefin layer;
said second layer of EVOH being applied directly onto said second tie layer;
a third tie layer applied directly onto said second EVOH layer; and
said second layer of polyolefin being applied directly onto said third tie layer, said second layer of polyolefin being the innermost layer that contacts the container's contents.

10. A non-foil oxygen barrier laminate for producing a container comprising from the outer surface to the inner surface contacting the container's contents:
a) a paperboard substrate having an exterior and an interior surface;
b) a first layer of polyolefin coated on said exterior surface of said paperboard substrate;
c) a layer of polyamide applied onto said interior surface of said paperboard substrate;
d) a second and innermost layer of polyolefin that will contact the contents of the container;
e) a first oxygen barrier layer of EVOH applied directly onto said polyamide layer;
f) a second barrier layer comprising a member selected from the group consisting of EVOH, polyvinyl alcohols, polyamides, polyesters, polyethylene terephthalates, polyolefins, cyclic olefin copolymers, polycarbonates, liquid crystalline polymers and blends thereof or blends of any of the foregoing with at least one member selected from the group consisting of desiccants, molecular sieves and cyclodextrins, provided intermediate said first barrier layer of EVOH and said innermost polyolefin layer but which is not in contact with said first barrier layer of EVOH; and
g) a polymer layer intermediate the first oxygen barrier layer of EVOH and the second barrier layer.

11. A sealed container and a perishable product contained therein, the container being constructed of a laminate according to claim 1, the product being hot filled into the container, said product having been heated to a temperature sufficient to kill essentially all the microorganisms in the food product, sealing the container and cooling the product within the container to ensure that the product is shelf stable.

12. A container blank constructed from a laminate according to claim 1.

13. A container blank constructed from a laminate according to claim 9.

14. A container blank constructed from a laminate according to claim 10.

15. A container constructed from a laminate according to claim 1.

16. A container constructed from a laminate according to claim 9.

17. A container constructed from a laminate according to claim 10.

18. A laminated packaging material especially for heat sealable, hot fill, room temperature storage liquid food packages comprising an oxygen barrier laminate according to claim 1.

19. A laminated packaging material especially for heat sealable, cold fill, room temperature storage comprising an oxygen barrier laminate according to claim 1.

20. A laminated packaging material especially for heat sealable, cold fill, refrigerated storage comprising an oxygen barrier laminate according to claim 1.

21. A laminated packaging material especially for heat sealable, hot fill, room temperature storage liquid food packages comprising an oxygen barrier laminate according to claim 9.

22. A laminated packaging material especially for heat sealable, cold fill, room temperature storage comprising an oxygen barrier laminate according to claim 9.

23. A laminated packaging material especially for heat sealable, cold fill, refrigerated storage comprising an oxygen barrier laminate according to claim 9.

24. A laminated packaging material especially for heat sealable, hot fill, room temperature storage liquid food packages comprising an oxygen barrier laminate according to claim 10.

25. A laminated packaging material especially for heat sealable, cold fill, room temperature storage comprising an oxygen barrier laminate according to claim 10.

26. A laminated packaging material especially for heat sealable, cold fill, refrigerated storage comprising an oxygen barrier laminate according to claim 10.

## Patentansprüche

1. Ein Sauerstoffsperrlaminat ohne Folie zur Herstellung eines Behälters, welches sich von der Außenseite bis zur den Inhalt des Behälters berührenden Innenseite zusammensetzt aus:
a) einem Pappträger mit einer Innen- und einer Außenfläche;
b) eine die besagte Außenfläche des besagten Pappträgers überziehende erste Polyolefinschicht;
c) eine auf die besagte Innenfläche des besagten Pappträgers aufgetragene Polyamidschicht;
d) eine zweite und innerste Polyolefinschicht, die den Inhalt des Behälters berührt;
e) eine direkt auf die besagte Polyamidschicht aufgetragene erste Sauerstoffsperrschicht aus EVOH;
f) eine zweite Schicht aus EVOH, die zwischen der besagten ersten EVOH-Schicht und der besagten innersten Polyamidschicht vorgesehen ist, sich aber nicht mit der besagten ersten EVOH-Schicht in Kontakt befindet;
g) eine Polymerschicht zwischen der ersten und zweiten EVOH-Schicht.

2. Das Sauerstoffsperrlaminat gemäß Anspruch 1, wobei die Polymerschicht eine dritte Polyolefinschicht ist, die zwischen der besagten ersten und zweiten EVOH-Schicht liegt.

3. Ein Sauerstoffsperrlaminat gemäß Anspruch 2, wobei eine Verbundschicht direkt auf die besagte erste EVOH-Schicht aufgetragen wird.

4. Ein Sauerstoffsperrlaminat gemäß Anspruch 2, wobei eine Verbundschicht direkt auf die besagte erste EVOH-Schicht aufgetragen wird, die besagte dritte Polyolefinschicht direkt über der besagten Verbundschicht vorgesehen ist, und eine zweite Verbundschicht direkt auf die besagte dritte Polyolefinschicht aufgetragen wird.

5. Ein Sauerstoffsperrlaminat gemäß Anspruch 4, wobei die besagte zweite EVOH-Schicht direkt auf die besagte zweite Verbundschicht aufgetragen wird.

6. Ein Sauerstoffsperrlaminat gemäß Anspruch 5, wobei eine dritte Verbundschicht auf die besagte zweite EVOH-Schicht aufgetragen wird und die besagte innerste Polyolefinschicht berührt.

7. Ein Sauerstoffsperrlaminat gemäß Anspruch 2, wobei eine Verbundschicht direkt auf die besagte erste EVOH-Schicht aufgetragen wird, die besagte dritte Polyolefinschicht über der besagten Verbundschicht vorgesehen ist, eine zweite Verbundschicht direkt auf die besagte Polyolefinschicht aufgetragen wird, und die besagte zweite EVOH-Sperrschicht direkt auf die besagte zweite Verbundschicht aufgetragen wird.

8. Ein Sauerstoffsperrlaminat gemäß Anspruch 7, wobei eine dritte Verbundschicht direkt auf die besagte zweite EVOH-Sperrschicht aufgetragen wird und die besagte innerste Polyolefinschicht berührt.

9. Das Sauerstoffsperrlaminat gemäß Anspruch 1, wobei Zwischen-Verbundschicht eine auf die besagte erste EVOH-Schicht aufgetragene erste Verbundschicht ist; und weiter umfassend:
eine direkt auf die besagte erste Verbundschicht aufgetragene dritte Polyolefinschicht;
eine direkt auf die besagte dritte Polyolefinschicht aufgetragene zweite Verbundschicht;
die direkt auf die besagte zweite Verbundschicht aufgetragene besagten zweite EVOH-Schicht;
eine direkt auf die besagte zweite EVOH-Schicht aufgetragene dritte Verbundschicht, und
die direkt auf die besagte dritte Verbundschicht aufgetragene besagte zweite Polyolefinschicht, wobei die besagte zweite Polyolefinschicht die den Behälterinhalt berührende innerste Schicht darstellt.

10. Ein Sauerstoffsperrlaminat ohne Folie zur Herstellung eines Behälters, welches sich von der Außenseite bis zur den Inhalt des Behälters berührenden Innenseite zusammensetzt aus:
a) einem Pappträger mit einer Innen- und einer Außenfläche;
b) eine die besagte Außenfläche des besagten Pappträgers überziehende erste Polyolefinschicht;
c) eine auf die besagte Innenfläche des besagten Pappträgers aufgetragene Polyamidschicht;
d) eine zweite und innerste Polyolefinschicht, die den Inhalt des Behälters berührt;
e) eine direkt auf die besagte Polyamidschicht aufgetragene erste Sauerstoffsperrschicht aus EVOH;
f) eine zweite Sperrschicht umfassend ein ausgewähltes Mitglied der folgenden Gruppe: EVOH, Polyvinylalkohole, Polyamide, Polyester, Polyethylenterephthalate, Polyolefine, Cycloolefin-Copolymere, Polycarbonate, flüssigkristalline Polymere und Legierungen aus diesen, oder bestehend aus Legierungen aus einem der Vorstehenden mit mindestens einem ausgewählten Mitglied der folgenden Gruppe: Trocknungsmittel, Molekularsiebe und Cyclodextrine, die zwischen der besagten ersten Sperrschicht aus EVOH und der besagten innersten Polyolefinschicht vorgesehen ist, aber nicht in mit der besagten ersten Sperrschicht aus EVOH in Berührung kommt; und
g) eine Polymerschicht zwischen der ersten Sauerstoffsperrschicht aus EVOH und der zweiten Sperrschicht.

11. Ein luftdichter Behälter und ein darin enthaltenes verderbliches Produkt, wobei der Behälter aus einem Laminat gemäß Anspruch 1 gefertigt ist, das Produkt beim Einfüllen in den Behälter heiß ist, da das besagte Produkt auf eine zum Abtöten aller Mikroorganismen in dem Lebensmittelprodukt ausreichend hohe Temperatur erhitzt wurde, der Behälter versiegelt und das Produkt im Behälter abgekühlt wird, um zu gewährleisten, dass das Produkt bei Raumtemperatur haltbar ist.

12. Ein aus einem Laminat gemäß Anspruch 1 hergestellter Zuschnitt für einen Behälter.

13. Ein aus einem Laminat gemäß Anspruch 9 hergestellter Zuschnitt für einen Behälter.

14. Ein aus einem Laminat gemäß Anspruch 10 hergestellter Zuschnitt für einen Behälter.

15. Ein aus einem Laminat gemäß Anspruch 1 hergestellter Behälter.

16. Ein aus einem Laminat gemäß Anspruch 9 hergestellter Behälter.

17. Ein aus einem Laminat gemäß Anspruch 10 hergestellter Behälter.

18. Ein laminiertes Verpackungsmaterial, insbesondere für Flüssiglebensmittelpackungen, die heiß befüllt, heiß versiegelt und bei Raumtemperatur gelagert werden können, umfassend ein Sauerstoffsperrlaminat gemäß Anspruch 1.

19. Ein laminiertes Verpackungsmaterial, insbesondere zur Heißversiegelung, Kaltbefüllung und Lagerung bei Raumtemperatur, umfassend ein Sauerstoffsperrlaminat gemäß Anspruch 1.

20. Ein laminiertes Verpackungsmaterial, insbesondere zur Heißversiegelung, Kaltbefüllung und Kühllagerung, umfassend ein Sauerstoffsperrlaminat gemäß Anspruch 1.

21. Ein laminiertes Verpackungsmaterial, insbesondere für Flüssiglebensmittelpackungen, die heiß befüllt, heiß versiegelt und bei Raumtemperatur gelagert werden können, umfassend ein Sauerstoffsperrlaminat gemäß Anspruch 9.

22. Ein laminiertes Verpackungsmaterial, insbesondere zur Heißversiegelung, Kaltbefüllung und Lagerung bei Raumtemperatur, umfassend ein Sauerstoffsperrlaminat gemäß Anspruch 9.

23. Ein laminiertes Verpackungsmaterial, insbesondere zur Heißversiegelung, Kaltbefüllung und Kühllagerung, umfassend ein Sauerstoffsperrlaminat gemäß Anspruch 9.

24. Ein laminiertes Verpackungsmaterial, insbesondere für Flüssiglebensmittelpackungen, die heiß befüllt, heiß versiegelt und bei Raumtemperatur gelagert werden können, umfassend ein Sauerstoffsperrlaminat gemäß Anspruch 10.

25. Ein laminiertes Verpackungsmaterial, insbesondere zur Heißversiegelung, Kaltbefüllung und Lagerung bei Raumtemperatur, umfassend ein Sauerstoffsperrlaminat gemäß Anspruch 10.

26. Ein laminiertes Verpackungsmaterial, insbesondere zur Heißversiegelung, Kaltbefüllung und Kühllagerung, umfassend ein Sauerstoffsperrlaminat gemäß Anspruch 10.

## Revendications

1. Un stratifié non-métallique imperméable à l'oxygène pour la production d'un récipient comprenant de la surface extérieure à la surface intérieure entrant en contact avec le contenu du récipient :
a) un substrat en carton ayant une surface extérieure et intérieure ;
b) une première couche de polyoléfine appliquée sur ladite surface extérieure dudit substrat en carton ;
c) une couche de polyamide appliquée sur ladite surface intérieure dudit substrat en carton ;
d) une deuxième couche la plus interne de polyoléfine qui entrera en contact avec le contenu du récipient ;
e) une première couche d'EVOH imperméable à l'oxygène appliquée directement sur ladite couche de polyamide ;
f) une deuxième couche d'EVOH qui est prévue comme couche intermédiaire entre ladite première couche d'EVOH et la couche de polyoléfine la plus interne, mais qui n'entre pas en contact avec ladite première couche d'EVOH ;
g) une couche de polymère intermédiaire entre les première et seconde couches d'EVOH.

2. Le stratifié imperméable à l'oxygène selon la revendication 1, dans lequel la couche de polymère est une troisième couche de polyoléfine intermédiaire entre lesdites première et seconde couches d'EVOH.

3. Un stratifié imperméable à l'oxygène selon la revendication 2, dans lequel une couche de liaison est appliquée directement sur ladite première couche d'EVOH.

4. Un stratifié imperméable à l'oxygène selon la revendication 2, dans lequel une couche de liaison est appliquée directement sur ladite première couche d'EVOH, ladite troisième couche de polyoléfine est pourvue directement au-dessus de ladite couche de liaison et une seconde couche de liaison est appliquée directement sur ladite troisième couche de polyoléfine.

5. Un stratifié imperméable à l'oxygène selon la revendication 4, dans lequel ladite seconde couche d'EVOH est appliquée directement sur ladite deuxième couche de liaison.

6. Un laminé imperméable à l'oxygène selon la revendication 5, dans lequel une troisième couche de liaison est appliquée sur ladite seconde couche d'EVOH et entre en contact avec ladite couche de polyoléfine la plus interne.

7. Un stratifié imperméable à l'oxygène selon la revendication 2, dans lequel une couche de liaison est appliquée directement sur ladite première couche d'EVOH, ladite troisième couche de polyoléfine est pourvue sur ladite couche de liaison, une seconde couche de liaison est appliquée directement sur ladite couche de polyoléfine et ladite seconde couche barrière EVOH est appliquée directement sur ladite deuxième couche de liaison.

8. Un stratifié imperméable à l'oxygène selon la revendication 7, dans lequel une troisième couche de liaison est appliquée sur ladite seconde couche barrière d'EVOH et entre en contact avec ladite couche de polyoléfine la plus interne.

9. Le stratifié imperméable à l'oxygène selon la revendication 1, dans lequel la couche de liaison intermédiaire est une première couche de liaison qui est appliquée sur ladite première couche d'EVOH ; et comprenant en outre :
une troisième couche de polyoléfine étant appliquée directement sur ladite première couche de liaison ;
une seconde couche de liaison étant appliquée directement sur ladite troisième couche de polyoléfine ;
ladite deuxième couche d'EVOH étant appliquée directement sur ladite deuxième couche de liaison ;
une troisième couche de liaison étant appliquée directement sur ladite seconde couche d'EVOH ; et
ladite seconde couche de polyoléfine étant appliquée directement sur ladite troisième couche de liaison, ladite seconde couche de polyoléfine étant la couche la plus interne qui entre en contact avec les contenus du récipient.

10. Un stratifié non-métallique imperméable à l'oxygène pour la production d'un récipient comprenant de la surface extérieure à la surface intérieure entrant en contact avec le contenu du récipient :
a) un substrat en carton ayant une surface extérieure et intérieure ;
b) une première couche de polyoléfine appliquée sur ladite surface extérieure dudit substrat en carton ;
c) une couche de polyamide appliquée sur ladite surface intérieure dudit substrat en carton ;
d) une deuxième couche la plus interne de polyoléfine qui entrera en contact avec le contenu du récipient ;
e) une première couche d'EVOH imperméable à l'oxygène appliquée directement sur ladite couche de polyamide ;
f) une deuxième couche barrière comprenant un élément choisi dans le groupe constitué par l'EVOH, les alcools polyvinyliques, les polyamides, les polyesters, les polyéthylènes téréphtalates, les polyoléfines, les copolymères d'oléfines cycliques, les polycarbonates, les polymères cristallins liquides et des mélanges de ceux-ci ou des mélanges de tout ce qui précède avec au moins un élément choisi dans le groupe constitué par les agents desséchants, des tamis moléculaires et des cyclodextrines, prévue comme couche intermédiaire entre ladite première couche barrière d'EVOH et ladite couche de polyoléfine la plus interne, mais qui n'entre pas en contact avec ladite première couche barrière d'EVOH ; et
g) une couche de polymère intermédiaire entre la première couche barrière à l'oxygène d'EVOH et la seconde couche barrière.

11. Un récipient scellé et un produit périssable qui y est contenu, le récipient étant constitué d'un stratifié selon la revendication 1, le produit étant rempli à chaud dans le récipient, ledit produit ayant été chauffé à une température suffisante pour tuer essentiellement tous les micro-organismes dans le produit alimentaire, sceller le récipient et refroidir le produit dans le récipient pour s'assurer que le produit soit de longue conservation.

12. Une découpe de récipient construite à partir d'un stratifié selon la revendication 1.

13. Une découpe de récipient construite à partir d'un stratifié selon la revendication 9.

14. Une découpe de récipient construite à partir d'un stratifié selon la revendication 10.

15. Un récipient construit à partir d'un stratifié selon la revendication 1.

16. Un récipient construit à partir d'un stratifié selon la revendication 9.

17. Un récipient construit à partir d'un stratifié selon la revendication 10.

18. Un matériau d'emballage stratifié particulièrement pour les emballages des aliments liquides thermoscellables, à remplissage à chaud, pour la conservation à la température ambiante comprenant un stratifié imperméable à l'oxygène selon la revendication 1.

19. Un matériau d'emballage stratifié particulièrement pour le stockage thermoscellable, à remplissage à froid, pour la conservation à la température ambiante comprenant un stratifié imperméable à l'oxygène selon la revendication 1.

20. Un matériau d'emballage stratifié particulièrement pour le stockage thermoscellable, à remplissage à froid, pour le stockage réfrigéré comprenant un stratifié imperméable à l'oxygène selon la revendication 1.

21. Un matériau d'emballage stratifié particulièrement pour les emballages des aliments liquides thermoscellables, à remplissage à chaud, pour la conservation à la température ambiante comprenant un stratifié imperméable à l'oxygène selon la revendication 9.

22. Un matériau d'emballage stratifié particulièrement pour le stockage thermoscellable, à remplissage à froid, pour une conservation à la température ambiante comprenant un stratifié imperméable à l'oxygène selon la revendication 9.

23. Un matériau d'emballage stratifié particulièrement pour le stockage thermoscellable, à remplissage à froid, pour le stockage réfrigéré comprenant un stratifié imperméable à l'oxygène selon la revendication 9.

24. Un matériau d'emballage stratifié particulièrement pour les emballages des aliments liquides thermoscellables, à remplissage à chaud, pour la conservation à la température ambiante comprenant un stratifié imperméable à l'oxygène selon la revendication 10.

25. Un matériau d'emballage stratifié particulièrement pour le stockage thermoscellable, à remplissage à froid, pour une conservation à la température ambiante comprenant un stratifié imperméable à l'oxygène selon la revendication 10.

26. Un matériau d'emballage stratifié particulièrement pour le stockage thermoscellable, à remplissage à froid, pour le stockage réfrigéré comprenant un stratifié imperméable à l'oxygène selon la revendication 10.
